# EUROPÄISCHE PATENTSCHRIFT

(11) **EP 2 414 148 B1**
(45) Veröffentlichungstag und Bekanntmachung des Hinweises auf die Patenterteilung: **19.06.2013**
(21) Anmeldenummer: 10705389.4
(22) Anmeldetag: 26.02.2010
(51) Int. Cl.: B29C 65/08, B29C 65/74, B65B 51/22, B65B 51/30

(54) **VORRICHTUNG ZUM SCHWEIßEN UND TRENNEN VON PACKSTOFFEN**
APPARATUS FOR WELDING AND SEPARATING PACKAGING MATERIALS
DISPOSITIF POUR SOUDER ET SÉPARER DES MATÉRIAUX D'EMBALLAGE

(30) Priorität: 01.04.2009 DE 102009002093
(43) Veröffentlichungstag der Anmeldung: 08.02.2012
(73) Patentinhaber: Robert Bosch GmbH, 70442 Stuttgart (DE)
(72) Erfinder: IPPERS, Juergen, 47929 Grefrath (DE); WIEDUWILT, Ulrich, 73529 Schwaebisch Gmuend (DE); BROOS, Claudia, 71409 Schwaikheim (DE)
(86) Internationale Anmeldenummer: PCT/EP2010/052475
(87) Internationale Veröffentlichungsnummer: WO 2010/112282

(56) Entgegenhaltungen:
- WO-A1-2005/102844
- WO-A1-2007/012917
- WO-A1-2008/102250
- WO-A1-2010/112282
- JP-A- 11 011 434
- US-A- 4 433 527
- US-A- 4 517 790
- US-A- 4 534 818
- US-A- 4 949 846
- US-A1- 2002 189 206

## Beschreibung

### Stand der Technik

Die vorliegende Erfindung betrifft eine Vorrichtung zum Schweißen und Trennen von Packstoffen mit einer kombinierten Schneid- und Spanneinrichtung, welche insbesondere in Schlauchbeutelmaschinen verwendet wird.

Im Stand der Technik sind Schlauchbeutelmaschinen bekannt, welche beispielsweise Süßigkeiten oder andere Artikel verpacken. Hierbei wird üblicherweise aus einer Folie über eine Formschulter ein länglich geschlossener Schlauch hergestellt und dann mit einem Quersiegelvorgang das offene Ende des Schlauchs verschlossen. Anschließend wird der Schlauch befüllt und dann über dem Füllbereich nochmals mittels einer weiteren Quersiegelung versiegelt. Gleichzeitig wird dabei mit Vornehmen der zweiten Quersiegelung am Fußende eines Schlauchbeutels auch eine erste Seite eines nachfolgenden Beutels (Kopfende) gesiegelt. Anschließend ist üblicherweise eine Schneidevorrichtung vorgesehen, um die noch zusammenhängenden Beutel zu trennen. Hierbei ist es bekannt, den Schweißvorgang beispielsweise mittels Ultraschall auszuführen, wobei die Ultraschall-Schweißvorrichtung eine Sonotrode und einen Amboss umfasst. Der Packstoff wird zwischen der Sonotrode und den Amboss durch Berühren der beiden Teile verschweißt. Ferner ist aus der US 4,517,790 B eine Vorrichtung gemäß dem Oberbegriff des Anspruchs 1 mit einem rotierenden Amboss und einer hin- und hergehenden Sonotrode bekannt.

### Offenbarung der Erfindung

Die erfindungsgemäße Vorrichtung mit den Merkmalen des Anspruchs 1 weist demgegenüber den Vorteil auf, dass sie in einem Arbeitsschritt ein Schweißen und ein Trennen von Packstoff, insbesondere von Schlauchbeuteln, ermöglicht. Erfindungsgemäß ist hierzu eine Ultraschall-Schweißvorrichtung mit einer Sonotrode mit wenigstens einem Sonotroden-Segment und einem Amboss mit wenigstens einem Amboss-Segment vorgesehen. Hierbei sind die Sonotrode und der Amboss jeweils um eine Rotationsachse drehbar angeordnet. Weiterhin ist eine kombinierte Schneid- und Spanneinrichtung vorgesehen, welche einen zugeführten Packstoff zuerst spannt und dann schneidet. Die kombinierte Schneid- und Spanneinrichtung ist dabei einstückiges Werkzeug, welches die beiden Funktionen "Spannen und Schneiden" ausführen kann und ist in die Ultraschall-Schweißvorrichtung integriert. Die Schneid- und Spanneinrichtung umfasst eine Schneide, welche vorzugsweise neben einem Schneidvorgang auch einen Spannvorgang ausführt.

Die Unteransprüche zeigen bevorzugte Weiterbildungen der Erfindung.

Vorzugsweise ist die Schneid- und Spanneinrichtung am Amboss angeordnet. Hierdurch kann ein besonders kompakter und einfacher Aufbau erreicht werden.

Weiter bevorzugt umfasst die Sonotrode eine Vielzahl von radial nach außen vorstehenden Sonotroden-Segmenten und der Amboss umfasst eine Vielzahl von radial nach außen vorstehenden Amboss-Segmenten. Somit sind die Sonotrode und der Amboss jeweils sternförmig ausgebildet und es kann ein rotatives Siegelsystem vorgesehen werden, welche pro Zeiteinheit eine hohe Siegelleistung sicherstellt.

Um eine möglichst schnelle Anpassung an unterschiedliche Packanforderungen zu ermöglichen, umfasst die kombinierte Schneid- und Spanneinrichtung ferner eine Verstelleinrichtung, um die Schneid- und Spanneinrichtung in Radialrichtung zu verstellen. Hierdurch kann insbesondere eine Position einer Schnittkante zwischen zwei aufeinander folgende Packungen einfach verändert werden.

Gemäß einer weiteren bevorzugten Ausgestaltung der Erfindung ist am Sonotroden-Segment eine Ausnehmung ausgebildet, welche derart angeordnet ist, dass sie für den Schneidvorgang die kombinierte Schneid- und Spanneinrichtung zumindest teilweise aufnimmt, ohne dass dabei ein Kontakt zwischen der Schneid- und Spanneinrichtung und den Wänden der Ausnehmung bzw. der Sonotrode vorkommt. Hierdurch wird ein Schneiden eines Packstoffs ohne Kontakt des Schneidwerkzeugs mit einem anderen Bauteil sichergestellt. Dadurch kann es zu keinem Verschleiß an der kombinierten Schneid- und Spanneinrichtung kommen. Ferner kann hierdurch insbesondere auf eine Schwingungsentkoppelung verzichtet werden, so dass die erfindungsgemäße Vorrichtung sehr kostengünstig ist. Die Ausnehmung ist dabei vorzugsweise rechteckig oder dreieckig oder trapezförmig oder kreisförmig ausgebildet.

Besonders bevorzugt umfasst die Verstelleinrichtung zwei schiefe Ebenen, welche aufeinander angeordnet sind und durch eine Relatiwerschiebung auf den beiden Ebenen die entsprechende Höhenänderung ausgeführt werden kann.

Um verschiedene Arten von Schnitten ausführen zu können, ist die kombinierte Schneid- und Spanneinrichtung vorzugsweise austauschbar am Amboss angeordnet. Eine Schneide der Schneid- und Spanneinrichtung ist dabei beliebig gewählt und ist insbesondere gerade oder wellenförmig oder in einer Zick-Zack-Anordnung vorgesehen.

Weiter bevorzugt sind am Sonotroden-Segment und am Amboss-Segment jeweils ein erster und ein zweiter Siegelbereich ausgebildet und die Schneid- und Spanneinrichtung ist zwischen dem ersten und dem zweite Siegelbereich angeordnet. Hierdurch wird erreicht, dass durch die rotatorische Anordnung von Sonotrode und Amboss zuerst ein Siegelschritt (Fußnaht der voreilenden Verpackung), dann der Spann- und Schneideschritt und dann wieder ein Siegelschritt (Kopfnaht der nachfolgenden Verpackung) ausgeführt wird.

Die erfindungsgemäße Vorrichtung kann dabei horizontal oder vertikal angeordnet sein, d.h., eine Förderrichtung für den Packstoff kann horizontal oder vertikal sein. Ferner kann die Vorrichtung kontinuierlich oder auch diskontinuierlich arbeiten.

Weiterhin betrifft die Erfindung eine Schlauchbeutelmaschine, welche eine erfindungsgemäße Vorrichtung zum Schweißen und Trennen von Packstoffen umfasst. Besonders bevorzugt sind dabei die Sonotrode und der Amboss vertikal angeordnet und die Förderrichtung der erzeugten Schlauchbeutel ist ebenfalls vertikal. Hierbei ist es auch möglich, dass durch einen Kontakt zwischen der Sonotrode und dem Amboss während der Siegelschritte der Packstoff mitgefördert wird.

Es sei angemerkt, dass grundsätzlich die Anzahl der Sonotroden-Segmente bzw. die Anzahl der Amboss-Segmente frei wählbar ist und gegebenenfalls von der Produktgröße bzw. einem Durchmesser der rotierenden Sonotrode bzw. des rotierenden Ambosses abhängt. Bevorzugt ist jedoch eine gerade Anzahl von Sonotroden- und Amboss-Segmenten und besonders bevorzugt 2 bis 8 Segmente, vorzugsweise jeweils 6 Segmente.

### Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer Vorrichtung gemäß einem ersten Ausführungsbeispiel der Erfindung in einer ersten Stellung,
- Figur 2: eine schematische Ansicht der Vorrichtung von Figur 1 in einer zweiten Stellung,
- Figur 3: eine schematische Ansicht der Vorrichtung von Figur 1 in einer dritten Stellung,
- Figur 4: eine schematische Ansicht der Vorrichtung von Figur 1 in einer vierten Stellung,
- Figur 5: eine schematische Ansicht der Vorrichtung von Figur 1 in einer fünften Stellung,
- Figur 6: eine schematische Seitenansicht einer Schneid- und Spanneinrichtung gemäß dem ersten Ausführungsbeispiel,
- Figur 7: eine schematische Ansicht der Vorrichtung gemäß einem zweiten Ausführungsbeispiel,
- Figur 8: eine schematische Ansicht der Vorrichtung gemäß einem dritten Ausführungsbeispiel der Erfindung.

### Bevorzugte Ausführungsformen der Erfindung

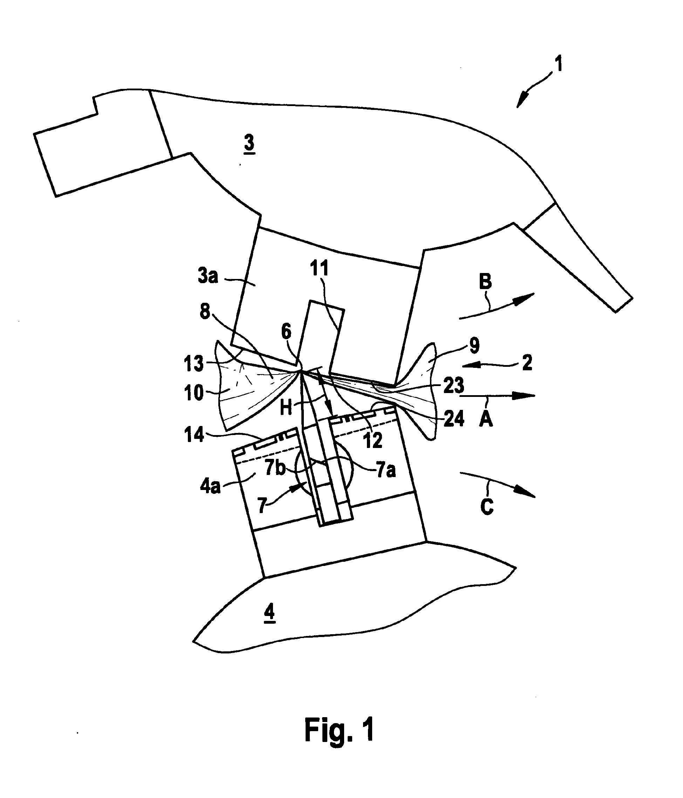

Nachfolgend wird unter Bezugnahme auf die Figuren 1 bis 6 eine Vorrichtung 1 zum Schweißen und Trennen von Packstoffen gemäß einem bevorzugten Ausführungsbeispiel der Erfindung im Detail beschrieben.

Wie aus den Figuren 1 bis 6 ersichtlich ist, umfasst die Vorrichtung 1 zum Schweißen und Trennen von Packstoffen eine Ultraschall-Schweißvorrichtung 2 mit einer Sonotrode 3 und einem Amboss 4. Die Sonotrode 3 und der Amboss 4 sind jeweils sternförmig aufgebaut, wobei die Sonotrode 3 eine Vielzahl von Sonotroden-Segmenten 3a umfasst, welche von einem mittleren Bereich radial nach außen vorstehen. Der Amboss 4 ist ebenfalls sternförmig aufgebaut und umfasst eine Vielzahl von Amboss-Segmenten 4a, die von einem mittleren Bereich des Amboss ebenfalls sternförmig nach außen vorstehen. Die Anzahl der Sonotroden-Segmente 3a und der Amboss-Segmente 4a ist dabei gleich und beträgt beispielsweise 6. Die Sonotrode 3 ist um eine Rotationsachse (nicht gezeigt) in Richtung des Pfeils B drehbar und der Amboss 4 ist um eine Rotationsachse (ebenfalls nicht gezeigt) in Richtung des Pfeils C drehbar.

In diesem Ausführungsbeispiel sind die Sonotrode und der Amboss 4 vertikal angeordnet und zwischen der Sonotrode 3 und dem Amboss 4 wird der Packstoff 8 in Richtung des Pfeils A hindurchgeführt.

In diesem Ausführungsbeispiel ist die Vorrichtung 1 Teil einer Schlauchbeutelmaschine, welche kontinuierlich oder diskontinuierlich arbeitet und dabei Beutel formt und befüllt. Mit dem Bezugszeichen 9 ist dabei ein bereits mit einem Artikel, wie z.B. Süßigkeiten, gefüllter Beutel bezeichnet und das Bezugszeichen 10 bezeichnet einen bereits geformten, jedoch noch nicht befüllten Beutel.

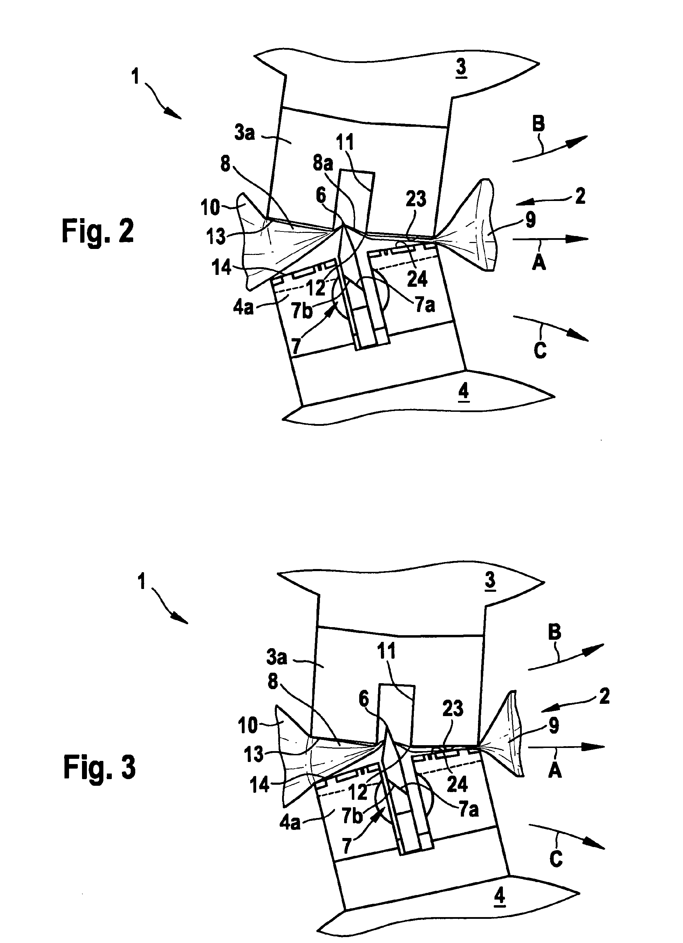

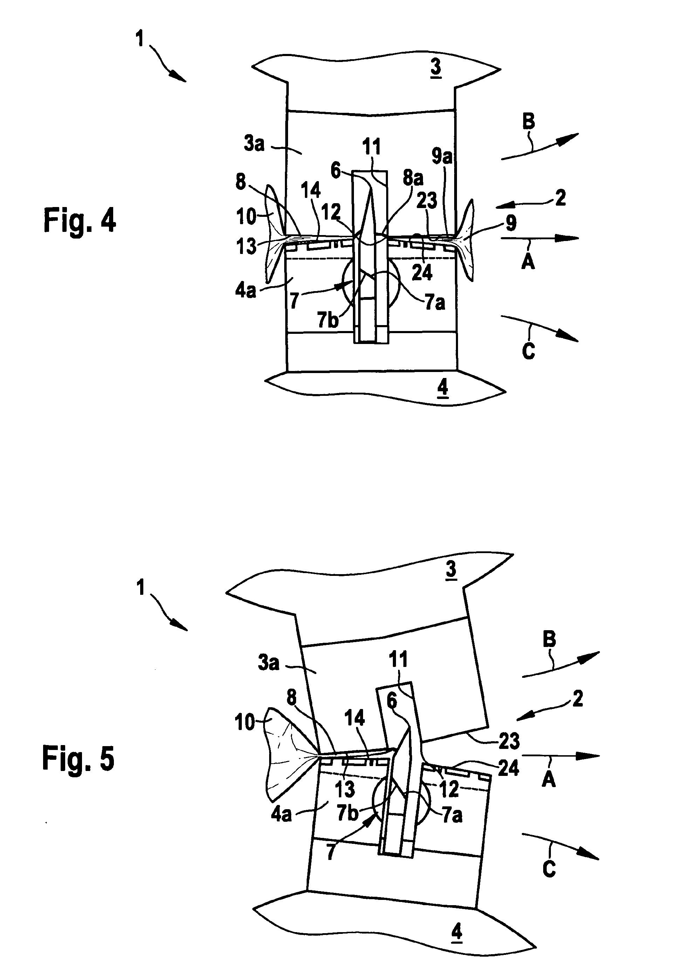

Die Sonotrode 3 weist an jedem Sonotroden-Segment 3a einen ersten Siegelbereich 13 und einen zweiten Siegelbereich 23 auf. In gleicher Weise weist jedes Amboss-Segment 4a des Amboss 4 einen ersten Siegelbereich 14 und einen zweiten Siegelbereich 24 auf. Wie aus den Figuren 1 bis 5 deutlich wird, arbeiten dabei jeweils die ersten Siegelbereiche 13, 14 und die zweiten Siegelbereiche 23, 24 zusammen, um einen Siegelvorgang in Abhängigkeit von einer Rotationsposition zwischen der Sonotrode 3 und dem Amboss 4 auszuführen. Wie aus Figur 3 bzw. Figur 5 ersichtlich ist, dienen die zweiten Siegelbereiche 23, 24 zum Siegeln einer Fußnaht eines bereits gefüllten voreilenden Beutels 9 und die ersten Siegelbereiche 13, 14 dienen zum Siegeln einer Kopfnaht eines nacheilenden Beutels 10 (Figur 5).

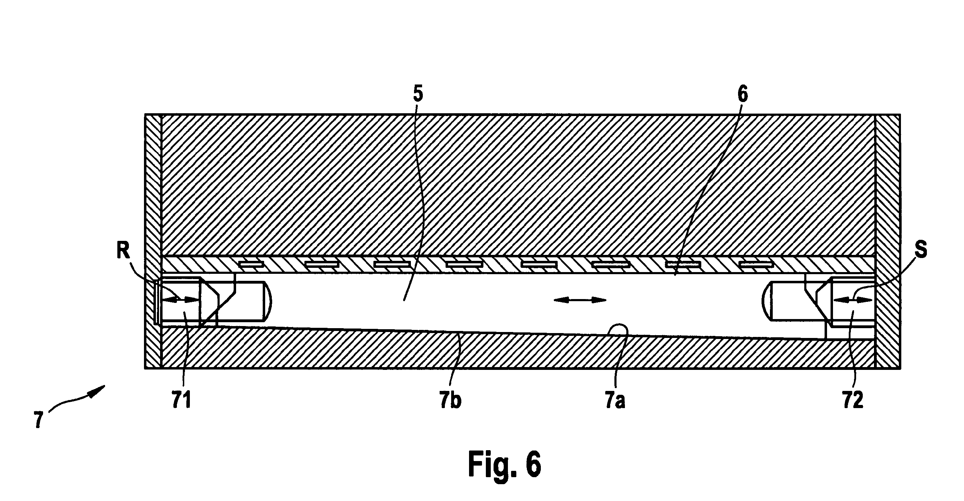

Weiterhin umfasst die Vorrichtung 1 eine kombinierte Schneid- und Spanneinrichtung 5. Die kombinierte Schneid- und Spanneinrichtung 5 dient einerseits zum Spannen des Packstoffs 8 und andererseits zum Schneiden des Packstoffs, um den voreilenden Beutel 9 vom nacheilenden Beutel 10 zu trennen. Wie aus den Figuren ersichtlich ist, ist die Schneid- und Spanneinrichtung 5 am Amboss 4, genauer an jedem Amboss-Segment 4a angeordnet. Die Schneid- und Spanneinrichtung 5 ist dabei am Amboss zwischen dem ersten Siegelbereich 14 und dem zweiten Siegelbereich 24 des Amboss-Segments angeordnet. Dabei steht die Schneid- und Spanneinrichtung 5 mit einer Höhe H radial über das Amboss-Segment 4a vor. Die Schneid- und Spanneinrichtung 5 umfasst eine Höhenverstelleinrichtung 7, um eine Relativposition der Schneid- und Spanneinrichtung 5 gegenüber dem Amboss-Segment 4a zu verstellen. Hierzu umfasst die Höhenverstelleinrichtung 7 eine erste schiefe Ebene 7a und eine zweite schiefe Ebene 7b. Durch eine Positionsänderung auf den schiefen Ebenen kann die Höhe der Schneid- und Spanneinrichtung 7 verändert werden. Wie aus Figur 6 ersichtlich ist, umfasst die Höhenverstelleinrichtung 7 eine erste Schraube 71 und eine zweite Schraube 72. Diese beiden Schrauben 71, 72 können, wie durch die beiden Doppelpfeile R und S angedeutet, in beide Richtungen in Längsrichtung der Schneide 6 erstellt werden. Hierdurch ist es möglich, dass die gesamte Schneid- und Spanneinrichtung 5 seitlich verstellt wird, wobei aufgrund der schiefen Ebenen 7a, 7b eine Höhenverstellung der Schneid- und Spanneinrichtung 5 nach oben oder unten möglich ist. Da die schiefen Ebenen 7a, 7b nur eine sehr kleine Steigung aufweisen, kann eine sehr exakte Verstellung der Höhe erfolgen.

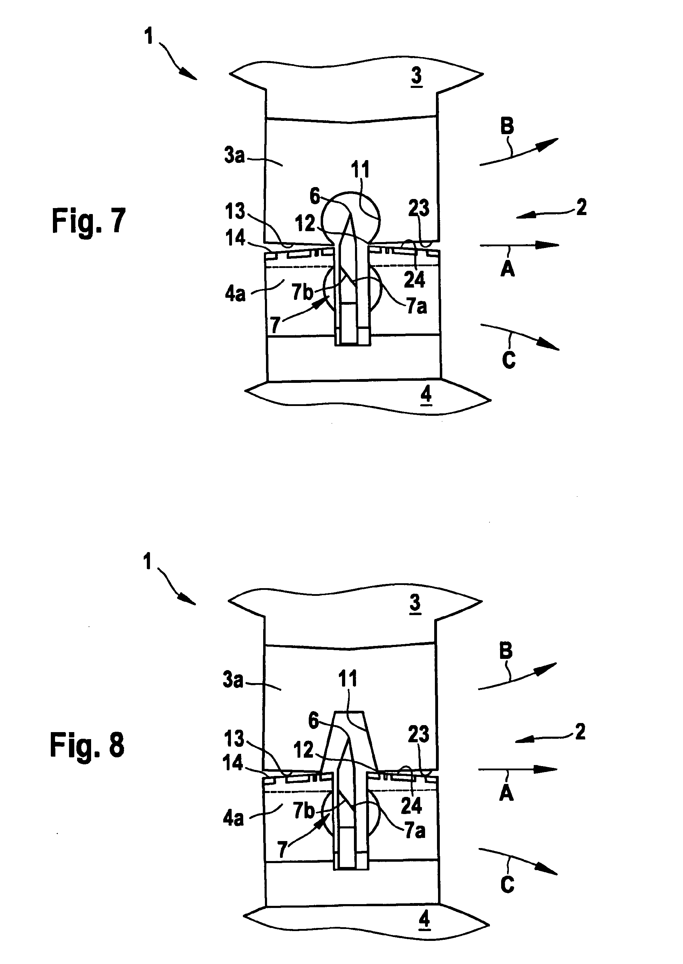

Weiterhin ist im Sonotroden-Segment 3a eine Ausnehmung 11 vorgesehen. Die Ausnehmung 11 ist an einer ähnlichen Position am Sonotroden-Segment 3a wie die Schneid- und Spanneinrichtung 5 am Amboss angeordnet, d.h., zwischen dem ersten Siegelbereich 13 und dem zweiten Siegelbereich 23. Die Ausnehmung 11 ist dabei derart gestaltet, dass während des Betriebs eine Berührung der Schneid- und Spanneinrichtung 5 mit der Sonotrode 3 vermieden wird. In diesem Ausführungsbeispiel ist die Ausnehmung 11 rechteckig ausgebildet. Sie kann jedoch, wie in Figur 6 gezeigt, kreisförmig sein, oder wie in Figur 7 gezeigt, trapezförmig sein. Die Ausnehmung 11 bildet dabei mit jeweils einem äußeren Umfangsbereich des Sonotroden-Segments 3a eine Kante 12 aus, welche einen Spannvorgang des Packstoffs 8 unterstützt.

Wie insbesondere aus Figur 4 ersichtlich ist, ragt während des Siegelvorgangs die Schneid- und Spanneinrichtung 5 teilweise in die Ausnehmung 11 hinein, ohne dass jedoch hierbei ein Kontakt zwischen der Schneid- und Spanneinrichtung 5 und dem Sonotroden-Segment 3a auftritt. Hierdurch wird eine am radialen Ende der Schneid- und Spanneinrichtung 5 angeordnete Schneide 6 vor einem Kontakt mit dem Sonotroden-Segment 3a bewahrt, so dass kein kontaktbedingter Verschleiß an der Schneide 6 auftritt.

Die Funktion der erfindungsgemäßen Vorrichtung 1 ist dabei wie folgt. Wie aus Figur 1 ersichtlich ist, kommt in einem ersten Schritt die Schneide 6 mit dem Packstoff 8 zwischen dem voreilenden Beutel 9 und dem nacheilenden Beutel 10 in Kontakt. Hierbei wird jedoch noch kein Schneidvorgang ausgeführt, da der Packstoff 8 noch nicht richtig gespannt ist. Wenn sich die Sonotrode 3 und der Amboss 4 in Richtung der Pfeile B und C weiter drehen, wandert die Schneide 6 der Schneid- und Spanneinrichtung 5 etwas in die Ausnehmung 11 hinein. Hierbei wird, wie aus Figur 2 ersichtlich ist, der Packstoff an einem Bereich 8a etwas zwischen der Schneide 6 und der Kante 12 am Sonotroden-Segment 3a gespannt. Dadurch beginnt die Schneide 6 in den Packstoff 8 einzudringen und führt den Schneidevorgang aus (Figur 3). Die Schneide 6 hat somit gleichzeitig eine Spann- und Schneidefunktion. Gleichzeitig beginnt bei der in Figur 3 gezeigten Position zwischen Sonotrode und Amboss der Siegelvorgang der Fußnaht des voreilenden Beutels 9 durch die zweiten Siegelbereiche 23, 24. In der in Figur 4 gezeigten Position ist der Schneidvorgang abgeschlossen, so dass der voreilende Beutel 9, welcher schon gefüllt wurde, vom nacheilenden Beutel 10 getrennt ist. Ebenfalls wird in Figur 4 der Siegelvorgang am Fußende des voreilenden Beutels 9 abgeschlossen, so dass dort eine Siegelnaht 9a hergestellt wurde. Gleichzeitig beginnt in Figur 4 der Siegelvorgang für das Kopfende des nacheilenden Beutels 10 mittels der ersten Siegelbereiche 13, 14. In Figur 5 ist der voreilende Beutel 9 durch eine nicht dargestellte Transporteinrichtung weitertransportiert worden und der Siegelvorgang der Kopfnaht am nacheilenden Beutel 10 wird gerade abgeschlossen. Durch den Kontakt an den ersten Siegelbereichen 13, 14 des Packstoffs mit der Sonotrode und dem Amboss wird auch eine Transportfunktion für den nacheilenden Beutel 10 ausgeführt. Anschließend wird dieser befüllt und soweit weitertransportiert, dass die nachfolgenden Sonotroden- bzw. Amboss-Segmente dann die Fußnaht und den Spann- und Schneidvorgang mittels der Spann- bzw. Schneideinrichtung 5 ausführen.

Somit kann erfindungsgemäß in einem Arbeitstakt sowohl die Siegelung einer Kopfnaht, einer Fußnaht und eine Trennung von zwei aufeinanderfolgenden Beuteln ausgeführt werden. Der Schneidvorgang benötigt dabei keine zusätzliche Hilfsenergie mit z.B. pneumatischer oder hydraulischer Unterstützung und verläuft vollkommen verschleißfrei.

Weiterhin sei angemerkt, dass durch Variation der Geometrie der Schneide 6 auch verschiedene Schnittkonturen erzeugt werden können und beispielsweise durch Vorsehen einer in Rotationsrichtung gerichteten kurzen Zusatzschneide eine Aufreißhilfe in die Fußnaht der Verpackung eingebracht werden kann. Weiterhin kann erfindungsgemäß auf eine schwingungstechnische Entkopplung zwischen den Bauteilen der Ultraschall-Schweißeinrichtung und der Schneideinrichtung verzichtet werden, da die erfindungsgemäße Schneid- und Spanneinrichtung 5 lediglich am Amboss 4 angeordnet ist und keinen Kontakt mit der Sonotrode 3 hat.

## Patentansprüche

1. Vorrichtung zum Schweißen und Trennen eines Packstoffs (8), umfassend
- eine Ultraschall-Schweißvorrichtung (2) mit einer Sonotrode (3) mit wenigstens einem Sonotroden-Segment (3a) und einem Amboss (4) mit wenigstens einem Amboss-Segment (4a),
- wobei der Amboss (4) um eine zweite Rotationsachse drehbar ist,
**dadurch gekennzeichnet, dass**
- die Sonotrode (3) um eine erste Rotationsachse drehbar ist,
- eine kombinierte Schneid- und Spanneinrichtung (5) in die Ultraschall-Schweißvorrichtung (2) integriert ist, und
- die Schneid- und Spanneinrichtung (5) den zugeführten Packstoff (8) zuerst spannt und dann im gespannten Zustand mittels einer Schneide (6) schneidet.

2. Vorrichtung nach Anspruch 1, **dadurch gekennzeichnet, dass** die Schneide (6) auch den Packstoff (9) spannt.

3. Vorrichtung nach Anspruch 1 oder 2, **dadurch gekennzeichnet, dass** die Schneid- und Spanneinrichtung (5) am Amboss (4) angeordnet ist.

4. Vorrichtung nach einem der vorhergehenden Ansprüche, **dadurch gekennzeichnet, dass** die Sonotrode (3) eine Vielzahl von radial vorstehenden Sonotroden-Segmenten (3a) aufweist und der Amboss (4) eine Vielzahl von radial vorstehenden Amboss-Segmenten (4a) aufweist.

5. Vorrichtung nach einem der vorhergehenden Ansprüche, **dadurch gekennzeichnet, dass** die Schneid- und Spanneinrichtung (5) eine Verstelleinrichtung (7) umfasst, um die Schneid- und Spanneinrichtung (5) in Radialrichtung zu verstellen.

6. Vorrichtung nach einem der vorhergehenden Ansprüche, **dadurch gekennzeichnet, dass** am Sonotroden-Segment (3a) eine Ausnehmung (11) ausgebildet ist, um die Schneid- und Spanneinrichtung (5) während des Schneidvorgangs zumindest teilweise aufzunehmen.

7. Vorrichtung nach Anspruch 6, **dadurch gekennzeichnet, dass** die Ausnehmung (11) rechteckig oder dreieckig oder trapezförmig oder kreisförmig ausgebildet ist.

8. Vorrichtung nach einem der Ansprüche 5 bis 7, **dadurch gekennzeichnet, dass** die Verstelleinrichtung (7) eine erste schiefe Ebene (7a) und eine zweite schiefe Ebene (7b) umfasst, um eine Positionsänderung der Schneid- und Spanneinrichtung (5) in Radialrichtung auszuführen.

9. Vorrichtung nach einem der vorhergehenden Ansprüche, **dadurch gekennzeichnet, dass** die Schneid- und Spanneinrichtung (5) austauschbar angeordnet ist.

10. Vorrichtung nach einem der vorhergehenden Ansprüche, **dadurch gekennzeichnet, dass** die Schneid- und Spanneinrichtung (5) eine gerade Schneide oder eine wellenförmige Schneide oder eine Zick-Zack-Schneide aufweist.

11. Vorrichtung nach einem der vorhergehenden Ansprüche, **dadurch gekennzeichnet, dass** an dem Sonotroden-Segment (3a) und an dem Amboss-Segment (4a) jeweils ein erster Siegelbereich (13, 23) und ein zweiter Siegelbereich (14, 24) ausgebildet ist und die Schneid- und Spanneinrichtung (5) am Amboss (4) zwischen dem ersten Siegelbereich (14) und dem zweiten Siegelbereich (24) angeordnet ist.

12. Schlauchbeutelmaschine, umfassend eine Vorrichtung zum Schweißen und Trennen nach einem der vorhergehenden Ansprüche.

## Claims

1. Apparatus for welding and separating a packaging material (8), said apparatus comprising
- an ultrasonic welding apparatus (2) having a sonotrode (3) with at least one sonotrode segment (3a), and an anvil (4) with at least one anvil segment (4a),
- wherein the anvil (4) is rotatable about a second axis of rotation,
**characterized in that**
- the sonotrode (3) is rotatable about a first axis of rotation,
- a combined cutting and tensioning device (5) is incorporated in the ultrasonic welding apparatus (2), and
- the cutting and tensioning device (5) initially tensions the supplied packaging material (8) and then cuts it in the tensioned state by means of a cutting edge (6).

2. Apparatus according to Claim 1, **characterized in that** the cutting edge (6) also tensions the packaging material (9).

3. Apparatus according to Claim 1 or 2, **characterized in that** the cutting and tensioning device (5) is located on the anvil (4).

4. Apparatus according to one of the preceding claims, **characterized in that** the sonotrode (3) has a plurality of radially projecting sonotrode segments (3a) and the anvil (4) has a plurality of radially projecting anvil segments (4a).

5. Apparatus according to one of the preceding claims, **characterized in that** the cutting and tensioning device (5) includes an adjusting device (7) in order to adjust the cutting and tensioning device (5) in the radial direction.

6. Apparatus according to one of the preceding claims, **characterized in that** a recess (11) is formed on the sonotrode segment (3a) in order to accommodate the cutting and tensioning device (5) at least partially during the cutting operation.

7. Apparatus according to Claim 6, **characterized in that** the recess (11) is rectangular or triangular or trapezoidal or circular.

8. Apparatus according to one of Claims 5 to 7, **characterized in that** the adjusting device (7) includes a first slanting plane (7a) and a second slanting plane (7b) in order to change a position of the cutting and tensioning device (5) in the radial direction.

9. Apparatus according to one of the preceding claims, **characterized in that** the cutting and tensioning device (5) is arranged so as to be exchangeable.

10. Apparatus according to one of the preceding claims, **characterized in that** the cutting and tensioning device (5) has a straight cutting edge or an undulating cutting edge or a zigzag cutting edge.

11. Apparatus according to one of the preceding claims, **characterized in that** a first sealing region (13, 23) and a second sealing region (14, 24) is realized in each case on the sonotrode segment (3a) and on the anvil segment (4a) and the cutting and tensioning device (5) is arranged on the anvil (4) between the first sealing region (14) and the second sealing region (24).

12. Bag forming, filling and sealing machine, comprising an apparatus for welding and separating according to one of the preceding claims.

## Revendications

1. Dispositif pour souder et séparer un matériau d'emballage (8), comprenant
- un dispositif de soudage aux ultrasons (2) avec une sonotrode (3) avec au moins un segment de sonotrode (3a) et une enclume (4) avec au moins un segment d'enclume (4a),
- l'enclume (4) pouvant tourner autour d'un deuxième axe de rotation,
**caractérisé en ce que**
- la sonotrode (3) peut tourner autour d'un premier axe de rotation,
- un dispositif combiné de coupe et de serrage (5) est intégré dans le dispositif de soudage aux ultrasons (2), et
- le dispositif de coupe et de serrage (5) serre d'abord le matériau d'emballage acheminé (8) et le coupe ensuite dans l'état serré au moyen d'une lame de coupe (6).

2. Dispositif selon la revendication 1, **caractérisé en ce que** la lame de coupe (6) serre également le matériau d'emballage (9).

3. Dispositif selon la revendication 1 ou 2, **caractérisé en ce que** le dispositif de coupe et de serrage (5) est disposé sur l'enclume (4).

4. Dispositif selon l'une quelconque des revendications précédentes, **caractérisé en ce que** la sonotrode (3) présente une pluralité de segments de sonotrode faisant saillie radialement (3a) et l'enclume (4) présente une pluralité de segments d'enclume (4a) faisant saillie radialement.

5. Dispositif selon l'une quelconque des revendications précédentes, **caractérisé en ce que** le dispositif de coupe et de serrage (5) présente un dispositif de réglage (7) afin de régler le dispositif de coupe et de serrage (5) dans la direction radiale.

6. Dispositif selon l'une quelconque des revendications précédentes, **caractérisé en ce qu'**un évidement (11) est réalisé sur le segment de sonotrode (3a) afin de recevoir au moins partiellement le dispositif de coupe et de serrage (5) pendant l'opération de coupe.

7. Dispositif selon la revendication 6, **caractérisé en ce que** l'évidement (11) est réalisé sous forme rectangulaire ou triangulaire ou trapézoïdale ou circulaire.

8. Dispositif selon l'une quelconque des revendications 5 à 7, **caractérisé en ce que** le dispositif de réglage (7) comprend un premier plan oblique (7a) et un deuxième plan oblique (7b), afin d'effectuer une modification de la position du dispositif de coupe et de serrage (5) dans la direction radiale.

9. Dispositif selon l'une quelconque des revendications précédentes, **caractérisé en ce que** le dispositif de coupe et de serrage (5) est disposé de manière interchangeable.

10. Dispositif selon l'une quelconque des revendications précédentes, **caractérisé en ce que** le dispositif de coupe et de serrage (5) présente une lame de coupe droite ou une lame de coupe de forme ondulée ou une lame de coupe en forme de zigzag.

11. Dispositif selon l'une quelconque des revendications précédentes, **caractérisé en ce qu'**à chaque fois une première région de scellement (13, 23) et une deuxième région de scellement (14, 24) sont réalisées sur le segment de sonotrode (3a) et sur le segment d'enclume (4a) et le dispositif de coupe et de serrage (5) est disposé sur l'enclume (4) entre la première région de scellement (14) et la deuxième région de scellement (24).

12. Machine à sachets tubulaires, comprenant un dispositif pour souder et séparer selon l'une quelconque des revendications précédentes.
